# EUROPÄISCHE PATENTSCHRIFT

(11) **EP 2 919 958 B1**
(45) Veröffentlichungstag und Bekanntmachung des Hinweises auf die Patenterteilung: **14.09.2016**
(21) Anmeldenummer: 13792888.3
(22) Anmeldetag: 13.11.2013
(51) Int. Cl.: B29C 45/00, H01H 3/10

(54) **BEDIENVORRICHTUNG INSBESONDERE FÜR EINE FAHRZEUGKOMPONENTE UND VERFAHREN ZU IHRER HERSTELLUNG**
OPERATING DEVICE FOR A CAR COMPONENT AND PROCESS FOR MANUFACTURING THE SAME
DISPOSITIF DE COMMANDE POUR UN COMPOSANT DE VOITURE ET PROCÉDÉ DE LA FABRICTION LEMÊME

(30) Priorität: 15.11.2012 DE 102012220917
(43) Veröffentlichungstag der Anmeldung: 23.09.2015
(73) Patentinhaber: Behr-Hella Thermocontrol GmbH, 70469 Stuttgart (DE)
(72) Erfinder: LAMMINGER, Egbert, 59494 Soest (DE); TREUGUTH, Udo, 59597 Erwitte (DE)
(74) Vertreter: dompatent von Kreisler Selting Werner - Partnerschaft von Patent- und Rechtsanwälten mbB
(86) Internationale Anmeldenummer: PCT/EP2013/073692
(87) Internationale Veröffentlichungsnummer: WO 2014/076115

(56) Entgegenhaltungen:
- WO-A1-2012/089506
- DE-A1- 3 508 232
- DE-A1-102007 038 547
- DE-A1-102009 048 330
- GB-A- 1 129 852
- JP-A- 2000 100 269
- JP-A- 2001 184 969
- JP-A- 2008 282 773
- US-A1- 2008 078 054

## Beschreibung

Die Erfindung betrifft eine Bedienvorrichtung insbesondere für eine Fahrzeugkomponente, wobei die Bedienvorrichtung insbesondere vorgesehen ist für ein Radio, ein CD- und/oder DVD-Abspielgerät, ein Navigationsgerät, ein Infotainment-Gerät, ein Heizungs- oder Klimasteuergerät oder für ein Mensch-Maschine-Interface. Ferner betrifft die Erfindung ein Verfahren zur Herstellung und zum Zusammenbau einer solchen Bedienvorrichtung.

Bedienvorrichtungen zur manuellen Einstellung/Vorgabe von Betriebsparametern elektrischer Geräte sind in vielfachen Ausgestaltungen bekannt. Zumeist weisen derartige Bedienvorrichtungen einen sogenannten Drehsteller auf, bei dem es sich um ein Drehbedienelement handelt, das an einer Lagereinheit drehbar gelagert ist.

Die Konstruktions-Komponenten einer Bedienvorrichtung werden soweit wie möglich als Kunststoff-Spritzgussteile gefertigt, was bezüglich geringer Herstellungskosten von Vorteil ist. Hierzu werden Spritzguss-Formwerkzeuge verwendet, deren Herstellung und Maße toleranzbehaftet sind. Spritzguss-Formwerkzeuge weisen im einfachsten Fall zwei Werkzeugteile auf, zwischen denen sich eine Werkzeugtrennungsebene erstreckt, die eine (von ggf. mehreren) Formtrennung(en) des Spritzgussteils definiert. Man spricht insoweit von werkzeuggebundenen und nicht werkzeuggebundenen Formtrennungen und meint damit Ebenen/Flächen an den Spritzgussteilen, die bzw. deren Relativpositionen ausschließlich durch Ausformungen in der den Formraum bildenden Formseite eines einzigen Werkzeugteils (werkzeuggebundene Formtrennung) oder durch eine/die Werkzeugtrennungsebene definiert sind (nicht werkzeuggebundene Formtrennung). Die Position einer nicht werkzeuggebundenen Formtrennung wird neben den Toleranzen, mit denen die zusammenwirkenden Werkzeugteile des Formwerkzeugs hergestellt sind, auch durch die Präzision der Anlage der Werkzeugteile bestimmt. Wenn also die Werkzeugteile beim Spritzgussprozess nicht stets gleichbleibend dicht aneinander liegen (was z. B. infolge eines unterschiedlich starken "Aufblasens" des Werkzeuges beim Einspritzen des Kunststoffmaterials der Falls sein kann), so unterscheiden sich die Spritzgussteile an den Formtrennungen, die durch die Werkzeugtrennungsebene definiert sind. Auch wenn diese Unterschiede nur im hundertstel Millimeterbereich liegen, können sie sich dennoch spürbar auf die Güte der Drehlagerung eines Drehstellers auswirken.

Beispiele für Bedienvorrichtungen mit an einer Lagereinheit drehbar gelagerten Drehbedienelementen sind aus GB-A-1 129 852 und DE-U-295 16 875 bekannt. Weitere Bedienvorrichtungen mit zwei- oder dreiteiligen Drehbedienelementen mit einfachen Schnappverbindungen oder Verschraubungen, bei denen aufgrund spezieller Konstruktionen kein spritzgießwerkzeugtrennungsebenenbedingtes Zusammen-/Toleranzspiel von Auflage-bzw. Kontaktflächen zu Abstütz- und Niederhalteflächen besteht, sind aus DE-A-35 08 232, DE-A-10 2007 038547, DE-A-10 2009 048330, WO-A-2012/089506, JP-A-2000 100269 und JP-A-2008 282773 bekannt.

Aus JP-A-2001 184969 ist eine weitere Bedieneinheit mit Drehbedienelementen bekannt, wobei auch hier nicht ausgeführt ist, wie werkzeuggebundene bzw. nicht-werkzeuggebundene Trennebenen von Spritzgießwerkzeugen zur Herstellung der Einzelteile der Drehbedienelemente zu wählen sind, um das Zusammen-/Toleranzspiel von Auflage- und Kontaktflächen zu Abstütz- und Niederhalteflächen zu optimieren.

Aufgabe der Erfindung ist es, eine Bedienvorrichtung insbesondere für Fahrzeugkomponenten zu schaffen, die ein Drehbedienelement aufweist, dessen Lagerung mechanisch verbesserte und insbesondere mit erhöhter Präzision reproduzierbare Eigenschaften aufweist.

Zur Lösung dieser Aufgabe wird mit der Erfindung ein Verfahren nach Anspruch 1 zur Herstellung einer Bedienvorrichtung, insbesondere für eine Fahrzeugkomponente vorgeschlagen, wobei die Bedienvorrichtung ein Drehbedienelement und eine Lagereinheit aufweist, an der das Drehbedienelement um eine Drehachse drehbar gelagert ist.

Nach der Erfindung kann es von Vorteil sein, wenn das erste Lagerelement einen in das Drehbedienelement eingetauchten inneren, aufragenden Kragen mit einer Stirnfläche aufweist, die die erste Lagerfläche bildet, wenn der Flansch des Drehbedienelements mit dessen Kontaktfläche auf der Stirnfläche aufliegt und von der Stirnfläche radial beabstandet ist und wenn das zweite Lagerelement mit dem ersten Lagerelement verrastet ist, wobei Verrastungsvorsprünge des einen Lagerelements, die rastend mit dem anderen Lagerelement zusammenwirken, gegen ein ungewolltes außer Eingriff Bringen gesichert sind.

Schließlich kann es zweckmäßig sein, wenn der Flansch des Drehbedienelements von radial außerhalb nach innen vorsteht und wenn das zweite Lagerelement in das erste Lagerelement eingeschoben und bezogen auf das erste Lagerelement radial nach innen versetzt ist, wobei in das zweite Lagerelement ein Abstandshalteelement zur Verhinderung eines ungewollten außer Eingriff Bringen der Verrastungsvorsprünge eingesetzt ist.

Zur Lösung dieser Aufgabe wird mit der Erfindung ferner eine Bedienvorrichtung, insbesondere für eine Fahrzeugkomponente, mit dem Merkmalen des Anspruchs 4 vorgeschlagen.

Das erfindungsgemäße Konstruktionskonzept des Drehlagers eines Kunststoff-Drehbedienelements, wie sie z. B. in hohen Stückzahlen bei Bedienvorrichtungen für Fahrzeugkomponenten als Drehsteller eingesetzt werden, sieht also vor, die aufeinander reibenden Berührungsflächen von Drehbedienelement und Drehlager derart zu positionieren, dass lediglich die unvermeidbar vorzusehende eine der beiden Berührungsflächen innerhalb der Werkzeugtrennungsebene des Spritzguss-Formwerkzeugs des betreffenden Elements (nämlich des Spritzguss-Formwerkzeuges des Drehbedienelements oder des Lagerelements) liegt. Nur diese eine Berührungsfläche resultiert also aus einer nicht werkzeuggebundenen Formtrennung, ist also etwas größeren Fertigungstoleranzen unterzogen als die andere (zweite) Berührungsfläche, deren Lage und Toleranzen ausschließlich durch eine werkzeuggebundene Formtrennung bestimmt ist.

Mit dem erfindungsgemäßen Ansatz lässt sich ein Drehsteller-(Drehbedienelement-)Aufbau realisieren, dessen Güte weniger abhängig von Temperaturveränderungen und Fertigungstoleranzen ist. Ferner vereinfacht sich die Fertigung, die Montage und die Bauteilkonstruktion.

Aus der verringerten Toleranzabhängigkeit resultiert eine reduzierte Auswirkung von ungewollten Haptik und Akustik-Eigenschaften durch Reibung (Reibfrequenzen).

Die zuvor genannten Eigenschaften des erfindungsgemäßen Aufbaus werden vor allem erzielt durch
- Reduzierung der nicht werkzeuggebundenen Formtrennungen an dem Drehbedienelement und der Lagereinheit bzw. deren Lagerelementen,
- Erhöhung der werkzeuggebundenen Formtrennungen,
- Reduzierung störender Reibfrequenzen (Stick-/Slip-Frequenzen - umgangssprachlich auch als Kratzen und Scharben bekannt),
- Reduzierung des Axialspiels zwischen den aufeinander reibenden Berührungs-(Drehlager-)Flächen,
- Vereinfachung der Bauteile (Teilekonstruktion) und
- Vereinfachung des Montage- und Fügeprozesses.

Vorteilhafterweise ist vorgesehen, dass das Drehbedienelement einen Flansch aufweist, an dem die Kontaktfläche ausgebildet ist, dass die Lagereinheit ein mit dem ersten Lagerelement mechanisch verbindbares zweites Lagerelement aufweist, das eine zur Abstützung an der Lagerfläche des ersten Lagerelements vorgesehene Abstützfläche und eine Niederhaltefläche zur Erstreckung über dem Flansch des Drehbedienelements aufweist, wobei die Abstützfläche und die Niederhaltefläche jeweils im Wesentlichen konzentrisch zur Drehachse und, in Erstreckung der Drehachse betrachtet, beabstandet voneinander sind, und dass das zweite Lagerelement als von einem Formwerkzeug mit einer Werkzeugtrennungsebene hergestelltes Kunststoff-Spritzgussteil ausgebildet ist, wobei die Werkzeugtrennungsebene dieses Spritzguss-Formwerkzeug außerhalb der Anordnung der Abstützfläche und der Niederhaltefläche liegt.

In vorteilhafter Ausgestaltung der Erfindung kann ferner vorgesehen sein, dass das erste Lagerelement einen in das Drehbedienelement eingetauchten inneren, aufragenden Kragen mit einer Stirnfläche aufweist, die die erste Lagerfläche bildet, dass der Flansch des Drehbedienelements mit dessen Kontaktfläche auf der Stirnfläche aufliegt und von der Stirnfläche radial beabstandet ist und dass das zweite Lagerelement mit dem ersten Lagerelement verrastet ist, wobei Verrastungsvorsprünge des einen Lagerelements, die rastend mit dem anderen Lagerelement zusammenwirken, gegen ein ungewolltes außer Eingriff Bringen gesichert sind.

In weiterer zweckmäßiger Ausgestaltung der Erfindung ist es möglich, dass der Flansch des Drehbedienelements von radial außerhalb nach innen vorsteht und dass das zweite Lagerelement in das erste Lagerelement eingeschoben und bezogen auf das erste Lagerelement radial nach innen versetzt ist, wobei in das zweite Lagerelement ein Abstandshalteelement zur Verhinderung eines ungewollten außer Eingriff Bringen der Verrastungsvorsprünge eingesetzt ist.

Die Erfindung wird nachfolgend anhand eines Ausführungsbeispiels und unter Bezugnahme auf die schematische und prinzipielle Darstellung in der Zeichnung näher erläutert. Im Einzelnen zeigen dabei:
- Fig. 1: das erste Lagerelement der Lagereinheit im Schnitt,
- Fig. 2: ebenfalls im Schnitt die Konstruktion eines zweiteiligen Formwerkzeuges zur spritzgusstechnischen Herstellung des ersten Lagerelements,
- Fig. 3: das Drehbedienelement (bzw. ein Teil davon) im Schnitt,
- Fig. 4: ebenfalls im Schnitt die Konstruktion eines zweiteiligen Formwerkzeuges zur spritzgusstechnischen Herstellung des Drehbedienelements,
- Fig. 5: einen Schnitt durch den Zusammenbau eines Drehbedienelements mit dem ersten Lagerelement,
- Fig. 6: das zweite Lagerelement der Lagereinheit im Schnitt,
- Fig. 7: ebenfalls im Schnitt die Konstruktion eines zweiteiligen Formwerkzeuges zur spritzgusstechnischen Herstellung des zweiten Lagerelements,
- Fig. 8: einen Schnitt durch den Zusammenbau des ersten sowie zweiten Lagerelements und des Drehbedienelements, und
- Fig. 9: ebenfalls im Schnitt die Konstruktion eines Drehstelleraufbaus mit weiteren Elementen.

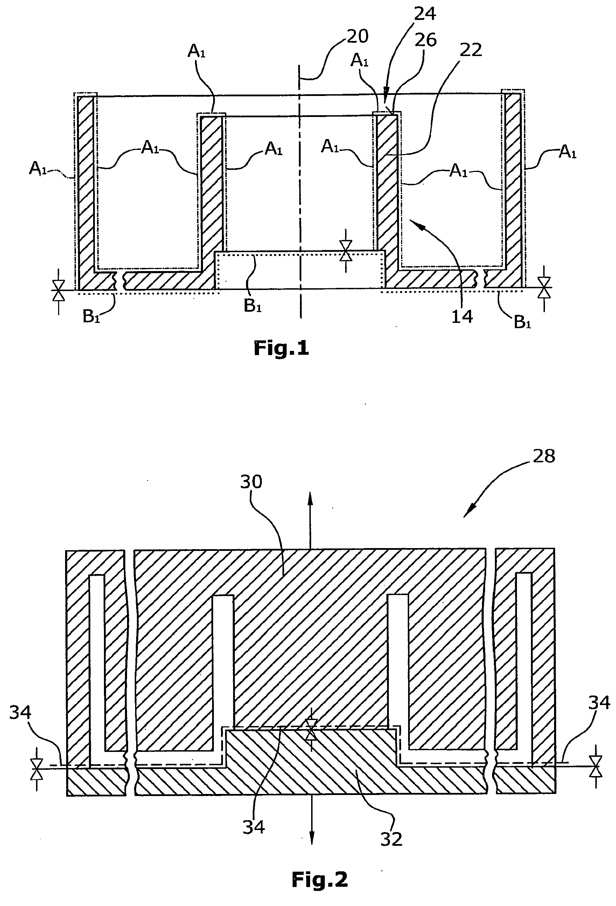

In den Fign. 1 bis 8 sind einerseits die für die Erfindung hauptsächlich relevanten Einzelteile eines Drehstelleraufbaus für eine Bedienvorrichtung für eine Fahrzeugkomponente (z. B. Drehsteller zur Temperaturvorgabe bzw. -einstellung bei einer Fahrzeug-Klimaanlage) und andererseits die Formwerkzeuge gezeigt, mit denen sich die Einzelteile spritzgusstechnisch herstellen lassen.

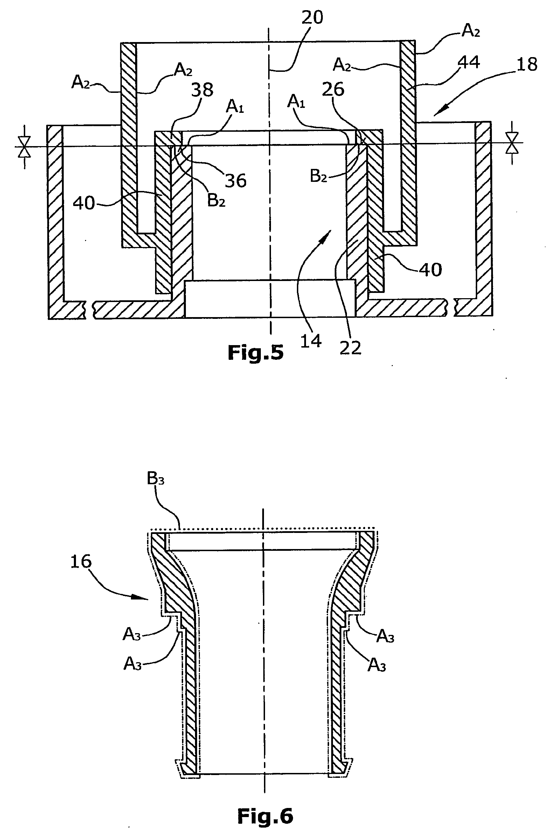

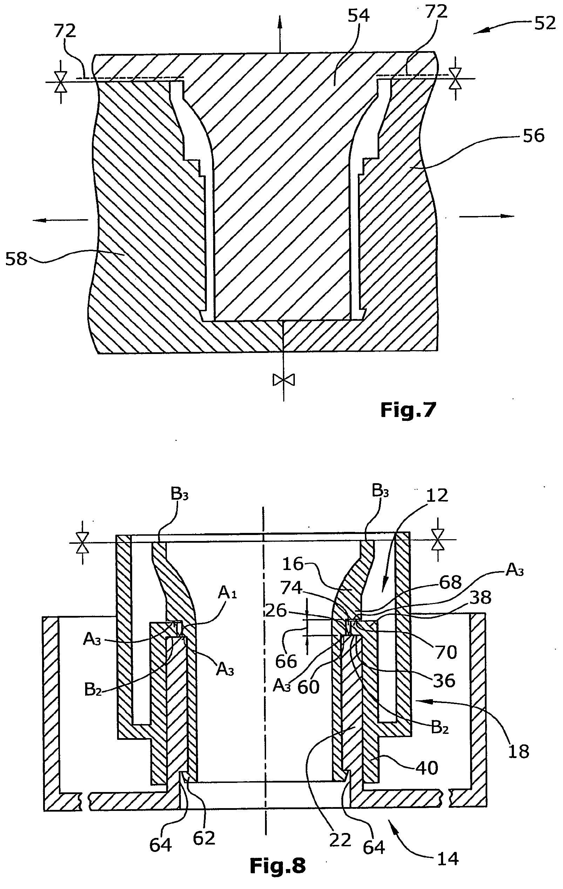

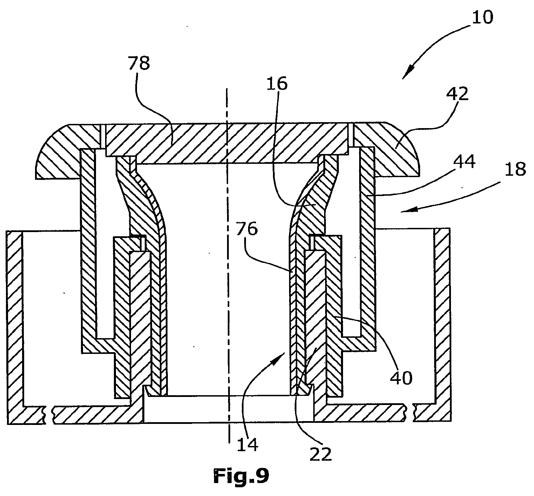

Der Drehstelleraufbau 10 (siehe Fign. 8 und 9) umfasst eine Lagereinheit 12, die zwei Lagerelemente 14,16 aufweist, an denen ein Drehbedienelement 18 drehbar gelagert ist (siehe z. B. Fign. 5 und 8). Das erste Lagerelement 14 definiert eine Drehachse 20 und zwar durch einen (inneren) Kragen 22, dessen ringförmige Stirnfläche 24 eine Lagerfläche 26 für das Drehbedienelement 18 bildet. Eine erste Besonderheit der Erfindung ist darin zu sehen, dass die Positionsgenauigkeit und Beschaffenheit der Lagerfläche 26 ausschließlich durch eine werkzeuggebundene Formtrennung (siehe bei A₁ in Fig. 1) definiert ist. Denn das für die Herstellung des ersten Lagerelements 14 verwendete zweiteilige Formwerkzeug 28 mit seinen Werkzeugteilen 30 und 32 weist eine Werkzeugtrennungsebene 34 auf, die außerhalb und damit nicht entlang der Lagerfläche 26 verläuft. Die durch diese Werkzeugtrennungsebene 34 verursachte nicht werkzeuggebundene Formtrennung ist in Fig. 1 bei B₁ gezeigt. Mit A und B (jeweils mit anderen Indizes) sind auch in den anderen Figuren diejenigen Oberflächenbereiche der Spritzguss-Bauteile bezeichnet, die durch werkzeuggebundene bzw. durch nicht werkzeuggebundene Formtrennungen definiert sind.

Mit anderen Worten lässt sich also die Lagerfläche 26 höchstpräzise fertigen.

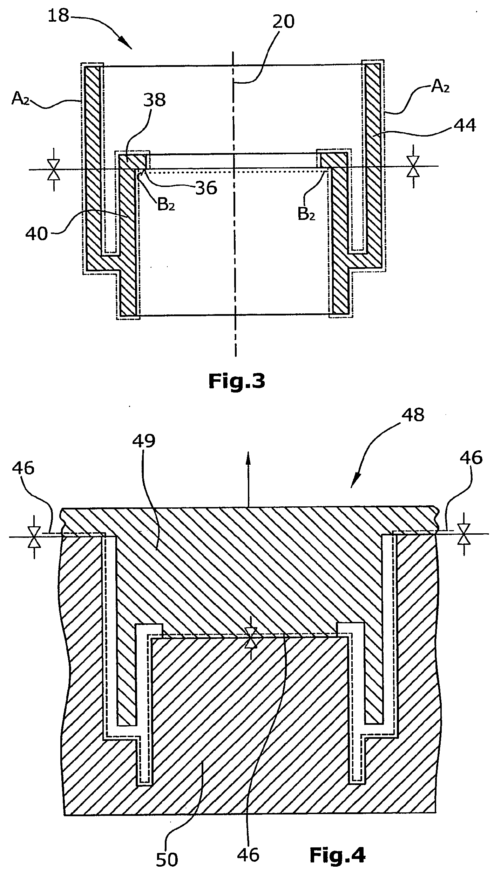

Mit der Lagerfläche 26 wirkt eine Kontaktfläche 36 des Drehbedienelements 18 zusammen (siehe Fig. 3). Diese Kontaktfläche 36 ist in diesem Ausführungsbeispiel an einem Innenflansch 38 ausgebildet, der von einer Hülse 40 absteht, die axial über den Kragen 22 geschoben ist. Wie z. B. anhand von Fig. 9 zu erkennen ist, ist auf das Drehbedienelement 18 ein Drehkranz 42 aufgesteckt, der manuell verdrehbar und an einem Halteelement 44 des Drehbedienelements 18 gehalten ist, wobei das Halteelement 44 drehfest (und einteilig) mit der Hülse 40 des Drehbedienelements 18 verbunden ist.

Die Kontaktfläche 36 des Drehbedienelements 18 resultiert aus einer nicht werkzeuggebundenen Formtrennung B₂ (siehe Fig. 3), da sie innerhalb der Werkzeugtrennungsebene 46 des Spritzguss-Formwerkzeugs 48 gemäß Fig. 4 verläuft, mit dem das Drehbedienelement 18 hergestellt wird. Damit ist die Positionsgenauigkeit der Kontaktfläche 36 auch von dem Grad des Zusammenfahrens bzw. Drückens der beiden Werkzeugteile 49 und 50 des Spritzguss-Formwerkzeugs 48 abhängig. Den Zusammenbau der beiden Lagerelemente 14,16 mit dem Drehbedienelement 18 zeigen Fign. 5 und 8. Das in diesem Ausführungsbeispiel in Schiebertechnik realisierte Spritzguss-Formwerkzeug 52 mit seinen drei Formwerkzeugteilen 54,56,58 für das zweite Lagerelement 16 zeigt Fig. 7, während Fig. 6 das zweite Lagerelement 16 zeigt. Das zweite Lagerelement 16 stützt sich über eine Abstützfläche 60 auf der Stirnfläche des ersten Lagerelements 14 ab. Mit dem ersten Lagerelement 14 ist das zweite Lagerelement 16 mittels hakenförmigen Verrastvorsprüngen 62 verrastet, die in Vertiefungen (Hinterschnitte) 64 an der Innenseite des Kragens 22 des ersten Lagerelements 14 eingreifen.

In axialem Abstand 66 oberhalb der Abstützfläche 60 weist das zweite Lagerelement 16 an einem umlaufenden Übergreifvorsprung 68 eine Übergreif- bzw. Niederhaltefläche 70 auf. Die Ausbildungen und damit (Relativ-)Positionierungen von Lagerfläche 26 (des ersten Lagerelements 14) einerseits und Abstützfläche 60, Niederhaltefläche 70 sowie deren Abstand 66 (am zweiten Lagerelement 16) andererseits sind sämtlich durch werkzeuggebundene Formtrennungen A (siehe Fign. 6 und 7) bedingt, da, wie Fig. 7 zeigt, die (Haupt-)Werkzeugtrennungsebene 72 zwischen dem (oberen) Werkzeugteil 54 und den beiden (unteren Schieber-)Werkzeugteilen 56,58 außerhalb des zuvor beschriebenen Bereichs des zweiten Lagerelements 16 liegt. Damit ist der Aufnahme-(Ring-)Zwischenraum 74 der Lagereinheit 12 zur Aufnahme des Innenflansches 38 allein durch werkzeuggebundene Formtrennungen definiert, was bei kostengünstiger Massenproduktion eine vergleichsweise hochpräzise Konstruktion erlaubt. Lediglich die Kontaktfläche 36 am Innenflansch 38 des Drehbedienelements 18 entsteht als Oberfläche einer nicht werkzeuggebundenen Formtrennung (B₂ in Fig. 3).

In Fig. 9 ist noch gezeigt, dass in das zweite Lagerelement 16 ein Abstandshalteelement 76 bzw. Spreizelement eingesetzt ist, das ein unbeabsichtigtes Lösen der Verrastung der beiden Lagerelement 14,16 garantieren kann. Ferner zeigt Fig. 9, dass auf das (nicht drehbare) zweite Lagerelement 16 der (ebenfalls feststehenden) Lagereinheit 12 eine Abdeckkappe 78 odgl. aufgesetzt sein kann, die von dem Drehkranz 42 umgeben ist. Die Abdeckkappe 78 kann hinterleuchtet sein und/oder z. B. eine Touch-Bedienfläche, einen oder mehrere Taster oder andere Bedienelemente oder eine Anzeigefläche und/oder eine Symbolik aufweisen.

### BEZUGSZEICHENLISTE

- 10: Drehstelleraufbau
- 12: Lagereinheit
- 14: erstes Lagerelement der Lagereinheit
- 16: zweites Lagerelement der Lagereinheit
- 17: Formtrennungen
- 18: Drehbedienelement des Drehstelleraufbaus
- 20: Drehachse des Drehbedienelements des Drehstelleraufbaus
- 22: Kragen des ersten Lagerelements
- 24: Stirnfläche des Kragens des ersten Lagerelements
- 26: Lagerfläche an der Stirnfläche des Kragens des ersten Lagerelements
- 28: Spritzguss-Formwerkzeug
- 30: Werkzeugteil des Spritzguss-Formwerkzeugs für das erste Lagerelement
- 32: Werkzeugteil des Spritzguss-Formwerkzeugs für das erste Lagerelement
- 34: Werkzeugtrennungsebene des Spritzguss-Formwerkzeugs für das erste Lagerelement
- 36: Kontaktfläche des Drehbedienelements
- 38: Innenflansch am Drehbedienelement
- 40: Hülse des Drehbedienelements
- 42: Drehkranz des Drehbedienelements
- 44: Halteelement für den Drehkranz des Drehbedienelements
- 46: Werkzeugtrennungsebene des Spritzguss-Formwerkzeugs für das Drehbedienelement
- 48: Spritzguss-Formwerkzeug für das Drehbedienelement
- 49: Werkzeugteil des Spritzguss-Formwerkzeugs für das Drehbedienelement
- 50: Werkzeugteil des Spritzguss-Formwerkzeugs für das Drehbedienelement
- 52: Spritzguss-Formwerkzeug für das zweite Lagerelement
- 54: Werkzeugteil des Spritzguss-Formwerkzeugs für das zweite Lagerelement
- 56: (Schieber-)Werkzeugteil des Spritzguss-Formwerkzeugs für das zweite Lagerelement
- 58: (Schieber-)Werkzeugteile des Spritzguss-Formwerkzeugs für das zweite Lagerelement
- 60: Abstützfläche
- 62: Verrastungsvorsprünge
- 64: Ausformungen
- 66: Abstand zwischen Abstützfläche und Niederhaltefläche
- 68: Übergreifvorsprung am zweiten Lagerelement der Lagereinheit
- 70: Niederhaltefläche am Übergreifvorsprung am zweiten Lagerelement
- 72: Werkzeugtrennungsebene des Spritzguss-Formwerkzeugs für das zweite Lagerelement
- 74: Aufnahme-(Ring-)Zwischenraum der Lagereinheit
- 76: Abstandshalte-(Spreiz-)element
- 78: Abdeckkappe
- A_{1,2,3}: werkzeuggebundene Flächen an den Spritzgussteilen
- B_{1,2,3}: nicht-werkzeuggebundene Flächen an den Spritzgussteilen

## Patentansprüche

1. Verfahren zur Herstellung einer Bedienvorrichtung, insbesondere für eine Fahrzeugkomponente, mit einem Drehbedienelement (18) und einer Lagereinheit(12), an der das Drehbedienelement (18) um eine Drehachse (20) drehbar gelagert ist, wobei bei dem Verfahren
- das um die Drehachse (20) drehbare Drehbedienelement (18) als Kunststoff-Spritzgussteil in einem ersten Formwerkzeug (48) mit einer Werkzeugtrennungsebene (46) hergestellt wird und
- die Lagereinheit (12) ein erstes Lagerelement (14) mit einer sich in einer Radialebene zur Drehachse (20) sowie konzentrisch zu dieser erstreckenden Lagerfläche (26) aufweist,
- wobei das erste Lagerelement (14) als Kunststoff-Spritzgussteil in einem zweiten Formwerkzeug (28) mit einer Werkzeugtrennungsebene (34) hergestellt wird,
- wobei das Drehbedienelement (18) in Folge seiner Herstellung durch das Formwerkzeug (48) mit einer Kontaktfläche (36) versehen ist, die sich ebenfalls in einer Radialebene zur Drehachse (20) und konzentrisch zu dieser erstreckt,
- wobei entweder die Lagerfläche (26) des ersten Lagerelements (14) oder die Kontaktfläche (36) des Drehbedienelements (18) außerhalb der Werkzeugtrennungsebene des Spritzguss-Formwerkzeugs (28; 48) für das betreffende besagte Element (14; 18) geformt wird,
- wobei die andere der beiden Flächen (26; 36) in der Werkzeugtrennungsebene (34; 46) des Spritzguss-Formwerkzeugs (28; 48) für das betreffende besagte Element (14; 18) geformt wird,
- wobei das Drehbedienelement (18) und die Lagereinheit (12) derart zusammengesetzt werden, dass die Kontaktfläche (36) des Drehbedienelements (18) an der Lagerfläche (26) des ersten Lagerelements (14) der Lagereinheit (12) anliegt,
- wobei das Drehbedienelement (18) einen Flansch (38) aufweist, an dem die Kontaktfläche (36) ausgebildet ist,
- wobei die Lagereinheit (12) ein mit dem ersten Lagerelement (14) mechanisch verbindbares zweites Lagerelement (16) aufweist, das eine zur Abstützung an der Lagerfläche (26) des ersten Lagerelements (14) vorgesehene Abstützfläche (60) und eine Niederhaltefläche (70) zur Erstreckung über dem Flansch (38) des Drehbedienelements (18) aufweist, wobei die Abstützfläche (60) und die Niederhaltefläche (70) jeweils im Wesentlichen konzentrisch zur Drehachse (20) und, in Erstreckung der Drehachse (20) betrachtet, beabstandet voneinander sind,
- wobei das zweite Lagerelement (16) als in einem dritten Formwerkzeug (52) mit einer Werkzeugtrennungsebene (72) hergestelltes Kunststoff-Spritzgussteil ausgebildet wird, wobei die Abstützfläche (60) und die Niederhaltefläche (70) jeweils außerhalb der Werkzeugtrennungsebene (72) dieses Spritzguss-Formwerkzeugs (52) geformt werden, und
- wobei die beiden Lagerelemente (14, 16) miteinander verbunden werden.

2. Verfahren nach Anspruch 1, **dadurch gekennzeichnet, dass** das erste Lagerelement (14) einen in das Drehbedienelement (18) eingetauchten inneren, aufragenden Kragen (22) mit einer Stirnfläche (24) aufweist, die die erste Lagerfläche (26) bildet, dass der Flansch (38) des Drehbedienelements (18) mit dessen Kontaktfläche (36) auf der Stirnfläche (24) aufliegt und von der Stirnfläche (24) radial beabstandet ist und dass das zweite Lagerelement (16) mit dem ersten Lagerelement (14) verrastet ist, wobei Verrastungsvorsprünge (62) des einen Lagerelements (14;16), die rastend mit dem anderen Lagerelement (16;14) zusammenwirken, gegen ein ungewolltes außer Eingriff Bringen gesichert sind.

3. Verfahren nach Anspruch 1 und 2, **dadurch gekennzeichnet, dass** der Flansch (38) des Drehbedienelements (18) von radial außerhalb nach innen vorsteht und dass das zweite Lagerelement (16) in das erste Lagerelement (14) eingeschoben und bezogen auf das erste Lagerelement (14) radial nach innen versetzt ist, wobei in das zweite Lagerelement (16) ein Abstandshalteelement (76) zur Verhinderung eines ungewollten außer Eingriff Bringen der Verrastungsvorsprünge (62) eingesetzt ist.

4. Bedienvorrichtung insbesondere für eine Fahrzeugkomponente, mit
- einem um eine Drehachse (20) drehbaren Drehbedienelement (18), das als in einem Formwerkzeug (48) mit einer Werkzeugtrennungsebene (46) hergestelltes Kunststoff-Spritzgussteil ausgebildet ist, und
- einer Lagereinheit (12), an der das Drehbedienelement (18) um die Drehachse (20) drehbar gelagert ist,
- wobei die Lagereinheit (12) ein erstes Lagerelement (14) aufweist, das als in einem Formwerkzeug (28) mit einer Werkzeugtrennungsebene (34) hergestelltes Kunststoff-Spritzgussteil ausgebildet ist,
- wobei das erste Lagerelement (14) eine sich in einer Radialebene zur Drehachse (20) sowie konzentrisch zu dieser erstreckende Lagerfläche (26) aufweist und
- wobei das Drehbedienelement (18) eine an der Lagerfläche (26) anliegende Kontaktfläche (36) aufweist, die sich ebenfalls in einer Radialebene zur Drehachse (20) und konzentrisch zu dieser erstreckt,
**dadurch gekennzeichnet,**
- **dass** entweder die Lagerfläche (26) des ersten Lagerelements (14) oder die Kontaktfläche (36) des Drehbedienelements (18) außerhalb der Werkzeugtrennungsebene (34;46) des Spritzguss-Formwerkzeugs (28;48) des betreffenden besagten Elements (14;18) angeordnet ist,
- **dass** die andere der beiden Flächen (26;36) in der Werkzeugtrennungsebene (34;46) des Spritzguss-Formwerkzeugs (28;48) des betreffenden besagten Elements (14;18) angeordnet ist,
- **dass** das Drehbedienelement (18) einen Flansch (38) aufweist, an dem die Kontaktfläche (36) ausgebildet ist,
- **dass** die Lagereinheit (12) ein mit dem ersten Lagerelement (14) mechanisch verbindbares zweites Lagerelement (16) aufweist, das eine zur Abstützung an der Lagerfläche (26) des ersten Lagerelements (14) vorgesehene Abstützfläche (60) und eine Niederhaltefläche (70) zur Erstreckung über dem Flansch (38) des Drehbedienelements (18) aufweist,
- **dass** die Abstützfläche (60) und die Niederhaltefläche (70) jeweils im Wesentlichen konzentrisch zur Drehachse (20) und, in Erstreckung der Drehachse (20) betrachtet, beabstandet voneinander sind,
- **dass** das zweite Lagerelement (16) als von einem dritten Formwerkzeug (52) mit einer Werkzeugtrennungsebene (72) hergestelltes Kunststoff-Spritzgussteil ausgebildet ist, wobei die Werkzeugtrennungsebene (72) dieses Spritzguss-Formwerkzeugs (52) außerhalb der Anordnung der Abstützfläche (60) und der Niederhaltefläche (70) liegt und
- **dass** die beiden Lagerelemente (14;16) miteinander verbunden sind.

5. Bedienvorrichtung nach Anspruch 4, **dadurch gekennzeichnet, dass** das erste Lagerelement (14) einen in das Drehbedienelement (18) eingetauchten inneren, aufragenden Kragen (22) mit einer Stirnfläche (24) aufweist, die die erste Lagerfläche (26) bildet, dass der Flansch (38) des Drehbedienelements (18) mit dessen Kontaktfläche (36) auf der Stirnfläche (24) aufliegt und von der Stirnfläche (24) radial beabstandet ist und dass das zweite Lagerelement (16) mit dem ersten Lagerelement (14) verrastet ist, wobei Verrastungsvorsprünge (62) des einen Lagerelements (14;16), die rastend mit dem anderen Lagerelement (16;14) zusammenwirken, gegen ein ungewolltes außer Eingriff Bringen gesichert sind.

6. Bedienvorrichtung nach Anspruch 4 und 5, **dadurch gekennzeichnet, dass** der Flansch (38) des Drehbedienelements (18) von radial außerhalb nach innen vorsteht und dass das zweite Lagerelement (16) in das erste Lagerelement (14) eingeschoben und bezogen auf das erste Lagerelement (14) radial nach innen versetzt ist, wobei in das zweite Lagerelement (16) ein Abstandshalteelement (76) zur Verhinderung eines ungewollten außer Eingriff Bringen der Verrastungsvorsprünge (62) eingesetzt ist.

## Claims

1. A method for the production of an operating device, in particular for a vehicle component, comprising a rotary operating element (18) and a bearing unit (12) at which the rotary operating element (18) is supported for rotation about a rotation axis (20), wherein in the method
- the rotary operating element (18) rotatable about the rotation axis (20) is produced as an injection-molded plastic part in a first molding die (48) having a die separation plane (46), and
- the bearing unit (12) comprises a first bearing element (14) with a bearing surface (26) that extends in a radial plane relative to the rotation axis (20) and concentrically to the same,
- wherein the first bearing element (14) is produced as an injection molded plastic part in a second molding die (28) having a die separation plane (34),
- wherein, due to being produced by means of the molding die (48), the rotary operating element (18) is provided with a contact surface (36) that also extends in a radial plane relative to the rotation axis (20) and concentrically to the same,
- wherein either the bearing surface (26) of the first bearing element (14) or the contact surface (36) of the rotary operating element (18) is formed outside the die separation plane of the injection molding die (28; 48) for the relevant element (14; 18),
- wherein the other of the two surfaces (26; 36) is formed in the die separation plane (34; 46) of the injection molding die (28; 48) for said relevant element (14; 18), and
- wherein the rotary operating element (18) and the bearing unit (12) are assembled to each other such that the contact surface (36) of the rotary operating element (18) contacts the bearing surface (26) of the first bearing element (14) of the bearing unit (12),
- wherein the rotary operating element (18) has a flange (38) on which the contact surface (36) is formed,
- wherein the bearing unit (12) comprises a second bearing element (16) adapted to be mechanically coupled with the first bearing element (14), which has a support surface (60) for support at the bearing surface (26) of the first bearing element (14) and a hold-down surface (70) to extend above the flange (38) of the rotary operating element (18), wherein the support surface (60) and the hold-down surface (70) are each substantially concentric with respect to the rotation axis (20) and, seen along the rotation axis (20), are spaced apart from each other, and
- wherein the second bearing element (16) is formed as an injection-molded plastic part produced in a third molding die (52) with a die separation plane (72), wherein the support surface (60) and the hold-down surface (70) are respectively formed outside the dieseparation plane (72) of this injection molding die (52), and
- wherein the two bearing elements (14, 16) are connected with each other.

2. The method of claim 1, **characterized in that** the first bearing element (14) has an inner, upward projecting collar (22) inserted into the rotary operating element (18) and having a front face (24) that forms the first bearing surface (26), that the flange (38) of the rotary operating element (18) rests on the front face (24) with its contact surface (36) and is radially spaced from the front face (24), and that the second bearing element (16) is locked with the first bearing element (14), wherein locking projections (62) of one bearing element (14; 16), which lockingly cooperate with the other bearing element (16; 14), are secured against inadvertent disengagement.

3. The method of claims 1 and 2, **characterized in that** the flange (38) of the rotary operating element (18) protrudes inward from radially outside, and that the second bearing element (16) is inserted into the first bearing element (14) and is offset radially inward with respect to the first bearing element (14), wherein a spacer element (76) is inserted into the second bearing element (16) to prevent an inadvertent disengagement of the locking projections (62).

4. An operating device, in particular for a vehicle component, comprising:
- a rotary operating element (18) which is rotatable about a rotation axis (20), the element being formed as an injection-molded plastic part produced in a molding die (48) having a die separation plane (46), and
- a bearing unit (12) at which the rotary operating element (18) is supported for rotation about the rotation axis (20),
- wherein the bearing unit (12) comprises a first bearing element (14) formed as an injection-molded plastic part produced in a molding die (28) having a die separation plane (34),
- wherein the first bearing element (14) has a bearing surface (26) extending in a radial plane with respect to the rotation axis (20) and concentrically to the same, and
- wherein the rotary operating element (18) has a contact surface (36) contacting the bearing surface (26), the contact surface also extending in a radial plane with respect to the rotation axis (20) and concentrically to the same,
**characterized in that**
- either the bearing surface (26) of the first bearing element (14) or the contact surface (36) of the rotary operating element (18) is arranged outside the die separation plane (34; 46) of the injection molding die (28; 48) of the respective element (14; 18), and
- the other of the two surfaces (26; 36) is arranged in the die separation plane (34; 46) of the injection molding die (28; 48) for the respective element (14; 18),
- the rotary operating element (18) has a flange (38) on which the contact surface (36) is formed,
- the bearing unit (12) comprises a second bearing element (16) adapted to be mechanically coupled with the first bearing element (14), which has a support surface (60) for support at the bearing surface (26) of the first bearing element (14) and a hold-down surface (70) to extend above the flange (38) of the rotary operating element (18),
- the support surface (60) and the hold-down surface (70) are each substantially concentric with respect to the rotation axis (20) and, seen along the rotation axis (20), spaced apart from each other,
- the second bearing element (16) is formed as an injection-molded plastic part produced in a molding die (52) with a die separation plane (72), wherein the die separation plane (72) of this injection molding die (52) is arranged outside the support surface (60) and the hold-down surface (70), and.
- the two bearing elements (14; 16) are connected with each other.

5. The operating device of claim 4, **characterized in that** the first bearing element (14) has an inner, upward projecting collar (22) inserted into the rotary operating element (18) and having a front face (24) that forms the first bearing surface (26), that the flange (38) of the rotary operating element (18) rests on the front face (24) with its contact surface (36) and is radially spaced from the front face (24), and that the second bearing element (16) is locked with the first bearing element (14), wherein locking projections (62) of one bearing element (14; 16), which lockingly cooperate with the other bearing element (16; 14), are secured against inadvertent disengagement.

6. The operating device of claims 4 and 5, **characterized in that** the flange (38) of the rotary operating element (18) protrudes inward from radially outside, and that the second bearing element (16) is inserted into the first bearing element (14) and is offset radially inward with respect to the first bearing element (14), wherein a spacer element (76) is inserted into the second bearing element (16) to prevent an inadvertent disengagement of the locking projections (62).

## Revendications

1. Procédé pour la fabrication d'un dispositif de commande, notamment pour une composante d'un véhicule, avec un élément de commande rotatif (18) et une unité de palier (12) sur laquelle l'élément de commande rotatif (18) est monté tournant autour d'un axe de rotation (20), selon le procédé :
- l'élément de commande (18) rotatif autour de l'axe de rotation (20) étant fabriqué comme pièce en matière plastique réalisée par injection dans un premier outil de formage (48) ayant un plan de séparation d'outil (46) et
- l'unité de palier (12) comprenant un premier élément de palier (14) avec une surface de palier (26) s'étendant dans un plan radial par rapport à l'axe de rotation (20) et de manière concentrique par rapport à celui-ci,
- le premier élément de palier (14) étant fabriqué comme pièce en matière plastique réalisée par injection dans un deuxième outil de formage (28) ayant un plan de séparation d'outil (34);
- l'élément de commande rotatif (18) étant pourvu, suite à sa fabrication par l'outil de formage (48), d'une surface de contact (36) qui s'étend également dans un plan radial par rapport à l'axe de rotation (20) et de manière concentrique par rapport à celui-ci,
- soit la surface de palier (26) du premier élément de palier (14), soit la surface de contact (36) de l'élément de commande rotatif (18) étant formée en dehors du plan de séparation d'outil de l'outil de formage à injection (28 ; 48) pour ledit élément concerné (14 ; 18),
- l'autre des deux surfaces (26 ; 36) étant formée dans le plan de séparation d'outil (34 ; 46) de l'outil de formage à injection (28 ; 48) pour ledit élément concerné (14 ; 18),
- l'élément de commande rotatif (18) et l'unité de palier (12) étant assemblés de façon que la surface de contact (36) de l'élément de commande rotatif (18) soit en appui contre la surface de palier (26) du premier élément de palier (14) de l'unité de palier (12),
- l'élément de commande rotatif (18) comportant une bride (38) sur laquelle la surface de contact (36) est formée,
- l'unité de palier (12) comprenant un second élément de palier (16) apte à être relié mécaniquement au premier élément de palier (14), qui comprend une surface d'appui (60) prévue pour un appui contre la surface de palier (26) du premier élément de palier (14) et une surface de maintien en appui (70) pour une étendue au-dessus de la bride (38) de l'élément de commande rotatif (18), la surface d'appui (60) et la surface de maintien en appui (70) étant sensiblement concentriques à l'axe de rotation (20) et, vu dans la direction de l'étendue de l'axe de rotation (20), espacées l'une de l'autre,
- le second élément de palier (16) étant conformé comme pièce en matière plastique réalisée par injection dans un troisième outil de formage (52) avec un plan de séparation d'outil (72), la surface d'appui (60) et la surface de maintien en appui (70) étant formées chacune en dehors du plan de séparation d'outil (72) de l'outil de formage à injection (52) et
- les deux éléments de palier (14, 16) étant reliés l'un à l'autre.

2. Procédé selon la revendication 1, **caractérisé en ce que** le premier élément de palier (14) forme un collet intérieur ascendant (22) plongé dans l'élément de commande rotatif (18), avec une face frontale (24) qui forme une première surface de palier (26), **en ce que** la bride (38) de l'élément de commande rotatif (18) est en appui, par sa surface de contact (36), sur la face frontale (24) et est espacée radialement de la surface frontale (24) et **en ce que** le second élément de palier (16) est encliqueté avec le premier élément de palier (14), des avancées d'encliquetage (62) de l'un des éléments de palier (14 ; 16) qui coopèrent par encliquetage avec l'autre élément de palier (16 ; 14), étant sécurisées contre une désolidarisation non voulue.

3. Procédé selon la revendication 1 et 2, **caractérisé en ce que** la bride (38) de l'élément de commande rotatif (18) est proéminent de radialement extérieur vers l'intérieur et **en ce que** le second élément de palier (16) est inséré dans le premier élément de palier (14) et est décalé, par rapport au premier élément de palier (14), radialement vers l'intérieur, un élément de maintien d'espacement (76) étant inséré dans le second élément de palier (16) pour empêcher une désolidarisation non voulue des avancées d'encliquetage (62).

4. Dispositif de commande, notamment pour une composante d'un véhicule, avec
- un élément de commande rotatif (18) tournant autour d'un axe de rotation (20), qui est conformé comme pièce en matière plastique réalisée par injection dans un premier outil de formage (48) ayant un plan de séparation d'outil (46) et
- une unité de palier (12) sur laquelle l'élément de commande rotatif (18) est monté tournant autour de l'axe de rotation (20),
- l'unité de palier (12) comprenant un premier élément de palier (14) conformé comme pièce en matière plastique réalisée par injection dans un deuxième outil de formage (28) ayant un plan de séparation d'outil (34),
- le premier élément de palier (14) comprenant une surface de palier (26) s'étendant dans un plan radial par rapport à l'axe de rotation (20) et de manière concentrique par rapport à celui-ci, et
- l'élément de commande rotatif (18) comprenant une surface de contact (36) adjacente à la surface de palier (26) qui s'étend également dans un plan radial par rapport à l'axe de rotation (20) et de manière concentrique par rapport à celui-ci,
**caractérisé**
- **en ce que** soit la surface de palier (26) du premier élément de palier (14), soit la surface de contact (36) de l'élément de commande rotatif (18) est disposée en dehors du plan de séparation d'outil (34 ; 46) de l'outil de formage à injection (28; 48) pour ledit élément concerné (14 ; 18),
- **en ce que** l'autre des deux surfaces (26 ; 36) est disposée dans le plan de séparation d'outil (34; 46) de l'outil de formage à injection (28 ; 48) pour ledit élément concerné (14 ; 18),
- **en ce que** l'élément de commande rotatif (18) comporte une bride (38) sur laquelle la surface de contact (36) est formée,
- **en ce que** l'unité de palier (12) comprend un second élément de palier (16) apte à être relié mécaniquement au premier élément de palier (14), qui comprend une surface d'appui (60) prévue pour un appui contre la surface de palier (26) du premier élément de palier (14) et une surface de maintien en appui (70) pour une étendue au-dessus de la bride (38) de l'élément de commande rotatif (18),
- **en ce que** la surface d'appui (60) et la surface de maintien en appui (70) sont sensiblement concentriques à l'axe de rotation (20) et, vu dans la direction de l'étendue de l'axe de rotation (20), espacées l'une de l'autre,
- **en ce que** le second élément de palier (16) est conformé comme pièce en matière plastique réalisée par injection dans un troisième outil de formage (52) avec un plan de séparation d'outil (72), le plan de séparation d'outil (72) de l'outil de formage à injection (52) étant situé en dehors de la disposition de la surface d'appui (60) et de la surface de maintien en appui (70) et
- **en ce que** les deux éléments de palier (14, 16) sont reliés l'un à l'autre.

5. Dispositif de commande selon la revendication 4, **caractérisé en ce que** le premier élément de palier (14) comprend un collet intérieur ascendant (22) plongé dans l'élément de commande rotatif (18), avec une face frontale (24) qui forme une première surface de palier (26), **en ce que** la bride (38) de l'élément de commande rotatif (18) est en appui, par sa surface de contact (36), sur la face frontale (24) et est espacée radialement de la surface frontale (24) et **en ce que** le second élément de palier (16) est encliqueté avec le premier élément de palier (14), des avancées d'encliquetage (62) de l'un des éléments de palier (14 ; 16) qui coopèrent par encliquetage avec l'autre élément de palier (16 ; 14), étant sécurisées contre une désolidarisation non voulue.

6. Dispositif de commande selon la revendication 4 et 5, **caractérisé en ce que** la bride (38) de l'élément de commande rotatif (18) est proéminent de radialement extérieur vers l'intérieur et **en ce que** le second élément de palier (16) est inséré dans le premier élément de palier (14) et est décalé, par rapport au premier élément de palier (14), radialement vers l'intérieur, un élément de maintien d'espacement (76) étant inséré dans le second élément de palier (16) pour empêcher une désolidarisation non voulue des avancées d'encliquetage (62).
